# EUROPEAN PATENT APPLICATION

(11) **EP 1 726 918 A1**
(43) Date of publication of application: **29.11.2006**
(21) Application number: 05011401.6
(22) Date of filing: 25.05.2005
(51) Int. Cl.: G01C 23/00, B64D 43/00, G06F 1/16

(54) **Computer system for aircrafts**

(71) Applicant: Lufthansa Sytems Group GmbH, 65451 Kelsterbach (DE)
(72) Inventor: Plogmann, Oliver, 65195 Wiesbaden (DE)
(74) Representative: Peterreins, Frank

(57) **Abstract**

Computer system (1) to be used in the cockpit of an aircraft, comprising a fixed screen (2), a docking unit (3) and a portable computer (4) in order to display on the fixed screen (2) in the cockpit information which is stored on the portable computer (4), wherein the docking unit (3) comprises an embedded computer (5) with a network connection (6) for connecting an arbitrary portable computer (4) to the computer system (1), a screen connection (7) for connecting the fixed screen (2) to the docking unit (3), a graphic processor (8), a power connection (9) and an input connection (10) for receiving signals from input means and a corresponding retrofitting set, a corresponding docking unit and a corresponding method.

## Description

The present invention relates to computer systems for cockpits of aircrafts, in particular to computer systems which can be used during the complete flight but need not undergo an extensive certification procedure.

Today in most of the cockpits of aircrafts the pilots still use printed aeronautic charts to plan and to carry out their flights. This is astonishing, since most of the charts are already available in a data format which can be shown on a standard computer system.

One reason for this is that there are very high requirements for devices which are fixed installed in the cockpit of an aircraft. For any additional hardware retrofitted in an aircraft, supplementary type certificates need to be generated (STCs), which approve the hardware for a certain aircraft type. These STCs are given by the local authorities, in Europe it is the JAA (Joined Aviation Authority) and in the USA it is the FAA (Federal Aviation Authority). Once this certification is given, any changes or upgrade in hardware or software would require a new STC application. Therefore, it is expensive to install a computer system in a cockpit which can be used during the complete flight and which corresponds to the requirements of the certificates. In addition, it is complicated and time consuming to exchange parts of the fixed computer system if there is a defect or newer and faster components must be installed.

Portable computer systems, also called laptops, can be used by the pilot before the movement of the aircraft on ground ("off-blocks"), and during the flight, if the aircraft has reached an altitude of about 10.000 feet. However, during the take off and the landing procedure, taxiing (ground movement) and during turbulence, loose equipment like the laptop must be securely stowed, as required by the aviation authorities. Therefore, charts stored on the laptop can not be used to support the pilot during these important and difficult time periods of the flights. Furthermore, standard laptops have several other disadvantages, like weak screen features (weak sunlight readability and low dimmability during night operation) and big size (which disables a mounting device for the laptop in the forward view of the pilot).

Therefore, the object of the present invention is to provide a computer system for the cockpit of an aircraft which can be used during the flight preparation as well as during the complete flight and which can be installed in the cockpit without an intensive certification process. According to a further object of the present invention, the update process and the maintenance processes of the main hardware and the software of the computer system should be as easy as possible and should require as less time of the aircraft on the ground as possible. Further, it is important that the parts of the computer system according to the invention are small and that it is easy to retrofit the computer system in the cockpits of older aircrafts.

The problem is solved by a computer system according to independent claim 1, by a retrofitting set according to independent claim 13, a docking unit according to independent claim 24 and a method according to independent claim 25.

The computer system according to the invention is adapted to be used in the cockpit of an aircraft. The computer system comprises at least a fixed screen, a docking unit and a portable computer. These three units enable that information stored on an arbitrary portable computer can be displayed on the fixed screen in the cockpit during the complete flight.

According to the invention, the docking unit enables a connection between the fixed screen in the cockpit and any portable computer. This is achieved by an embedded computer with a network connection which is part of the docking unit. The embedded computer and the network connection enable that a network connection between the portable computer and the docking unit can be established. Via this network connection, the docking unit with the connected screen and preferably an input device can exchange all relevant information with the portable computer. Further, the portable computer does not need a network connection. A USB connection is sufficient, since this USB connection can be connected to a network cable via a USB/LAN adapter.

The embedded computer according to the present invention does not comprise the full functionality of a computer, like the portable computer. The embedded computer comprises all means which are necessary to enable a network connection between the docking unit and the portable computer. However, the embedded computer itself does not comprise all features of a standard computer and is therefore not capable to carry out all functions. For example, it does not need to host a hard disk or other moving parts which would make the certification more difficult. In addition, the embedded computer does not need a ventilator, and therefore improves the maintenance cycle due to higher resistance against vibration. Finally, the embedded computer can operate with a small embedded operation system, for example embedded XP.

The computer system according to the invention further comprises an input connection, a screen connection, a graphical processor and a power connection. The information stored on the portable computer is processed by the software and hardware in the portable computer and transmitted via the network connection of the docking unit to the docking unit, graphical processed by the graphical processor in the docking unit and forwarded to the fixed screen via the screen connection of the docking unit. The user, for example a pilot, can interact with portal computer via appropriate input means, which are connected to the docking unit via the input connection of the docking unit.

The solution provided by the invention comprises two parts. The first part is realized by the members of the computer system installed in the cockpit of the aircraft, the fixed screen and the docking unit. The second part is an arbitrary computer which is portable and can therefore easily be exchanged. This concept achieves that the computer system easily fulfills the requirements to be certificated and that the computer system can be easily and inexpensive adapted to the needs of the user. The screen and the docking unit can undergo a simple certification process whereas the arbitrary portable computer does not need to undergo any certification at all. Following the FAA Advisory Circular ACC 120-75 (Authority regulations for EFB (Electronic Flight Bags)), the invention would fall under a Class 2 EFB category, which does not require any certification for the portable device and its software. The European Aviation Authorities JAA are following these recommendations in their TGL 98 Temporary Guidance Leaflet. Using this Class 2 category will create a significant added value to the Airlines, as the software or any upgrade or change in hardware of the portable device can be realized at minimum cost. In addition, this first part enables that the information provided by the arbitrary portable computer can be displayed on a screen in the cockpit of the aircraft also during taxi, take off and landing of the aircraft. This is the major task of this part of the computer system. The components, i.e. the hardware, used in this part of the computer system can stay the same for a long period of time, since this task is not response-time critical. The software in the docking unit can also stay the same for a long period of time, since only the operating system of the embedded computer is used. The soft- and hardware of the docking unit do not need to undergo the regular upgrade cycles as the portable computer unit does (almost weekly for data and software, 2-3 years for hardware).

All elements which may need an update or should be replaced in short time intervals are placed in the other part, the portable computer. The portable computer houses the important hardware, namely the processor, the RAM and the hard drive. These pieces of hardware are important for the speed with which, for example, the flight charts are calculated. Therefore, it may be desirable to exchange these pieces with faster ones in order to improve the system. The portable computer houses also the important software, namely the applications which are used by the pilot, for example, the application which calculates the flight chart base on the data stored on the hard disk. Such software may be improved in short time periods and therefore should be updated as soon as possible. In addition, new software may be developed to support the pilot. Since these elements are part of the portable computer, these elements can be updated or replaced simply by exchanging the portable computer. The time intensive process of exchanging the hardware and updating the software itself does not affect the standing time of the aircraft on the ground, since the computer system in the aircraft can be used with another portable computer. Then, the software and hardware of the portable computer can be updated without stopping the complete aircraft.

The portable computer can be stored somewhere in the cockpit, preferably in a holder, with the top closed on the keyboard so that it can not move. In this position, the portable computer should be connected to a power source and to the docking unit via a network connection, so that the processor capacity and the random access memory of the portable computer can be used by the pilot to work with information stored on the portable computer during the flight. Therefore, the holder preferably comprises a power supply unit for the portable computer. Alternatively, the holder may comprise an area in which the standard power supply unit of the portable computer can be placed.

The inventive computer system also enables that the pilot has the possibility to have all relevant information by hand. For example, every pilot has his own portable computer which he uses also during a flight as part of the inventive computer system. Therefore, the pilot can prepare himself for the flight wherever he wants, since all necessary information is stored in his portable computer. The pilot can also select already the relevant flight charts for the next flight at home which may reduce the preparation time in the cockpit significantly.

According to a preferred embodiment of the present invention, the computer system also comprises input means. These input means may be preferably part of the fixed screen, for example, as it is realized by a touch screen. A further solution would be line select keys at the screen. These input means are connected to the input connection of the docking unit. Optional a keyboard or track ball can be connected to the embedded computer in the docking unit.

According to a further preferred embodiment, the docking unit of the computer system also comprises at least one video connection for displaying video signals provided by an external device on the fixed screen. These video connections can be used in the cockpit to connect the fixed screen with video cameras installed in the aircraft to monitor the cabin and the entrances. The pilot may select via input means whether video signals from one of the cameras should be displayed on the screen or information provided by the portable computer. The docking unit preferably also comprises an aviation connection for connecting aviation devices in the cockpit of the aircraft to the portable computer. These aviation devices may provide the portable computer via the docking unit with aviation information like the present position of the aircraft, the present speed or the flown route. One example for such an aviation connection is an ARINC connection. To stay in the category Class II of the FAA and JAA regulations, without required certification for the portable computer, the aircraft data connection will preferably be restricted to a "read only bus", which does not allow passing any information back to the aircraft through this interface.

In a preferred embodiment, the docking unit also comprises a power backup unit, preferably a rechargeable battery. This backup unit ensures that the inventive computer system can also be used if the power source of the aircraft is interrupted. According to another preferred embodiment, the docking unit also comprises a backup memory. This backup memory may save regularly the information to be displayed on the screen. If the connection between the portable computer and the docking unit is interrupted or the portable computer breaks down, at least the last information to be displayed may be saved and can be displayed on the screen.

As described above, according to the invention the portable computer is connected to the docking unit via a network connection. However, instead of a network connection of the portable computer, a USB connection , for example a USB 2.0 connection may be used. In this case, a USB/LAN adapter may be plugged in the USB connection of the portable computer in order to connect the portable computer to a network cable.

According to a further preferred embodiment, the docking unit comprises a further network connection. This further network connection is used to connect a further portable computer or a further docking unit to the embedded computer of the docking unit. For example, in an aircraft two computer systems according to the present invention are used, one for the pilot and a further one for the copilot. Both computer systems may be connected via this further network connection in the docking unit. The advantage of this connection is, that both pilots can display the content of each portable computer on their screen (e.g. in case of a malfunction of one portable computer, both screens on board can still be used).

The objects of the invention are also solved by a retrofitting set to be installed in the cockpit of an aircraft in order to achieve a computer system. The retrofitting system comprises a fixed screen and a docking unit in order to enable to display on the fixed screen in the cockpit information which is stored on a portable computer. The docking unit comprises an embedded computer with a network connection for connecting an arbitrary portable computer to the computer system, a screen connection for connecting the fixed screen to the docking unit, a graphic processor, a power connection and an input connection for receiving signals from input means.

A further advantage of this invention is that the docking unit and the screen can be implemented in almost all common commercial aircrafts. Due to the fact that the screen can be mounted in portrait or landscape installation, the docking unit can be placed wherever feasible in the different cockpits and only the mounting kit for the display needs to be adapted.

The above mentioned objects are also solved by a docking unit to be used in order to achieve the above described computer system. The docking unit comprises an embedded computer with a network connection for connecting an arbitrary portable computer to the computer system, a screen connection for connecting a fixed screen to the docking unit, a graphic processor, a power connection and an input connection for receiving signals from input means.

The above mentioned objects are also solved by a method for providing a computer system in the cockpit of an aircraft, wherein the cockpit comprises a fixed screen and a docking unit. The docking unit comprises an embedded computer with a network connection for connecting an arbitrary portable computer to the computer system, a screen connection for connecting the fixed screen to the docking unit, a graphic processor, a power connection and an input connection for receiving signals from input means. The method comprises the step of connecting a portable computer to the docking unit via the network connection.

Further preferred embodiments are described in the dependent claims.

The invention is in the following described by means of the enclosed Figures, which show:
- Figure 1: A schematic diagram of the computer system according to the invention.

- Figure 2: A flow chart showing the process of using the inventive computer system before the flight, during the flight and after the flight.

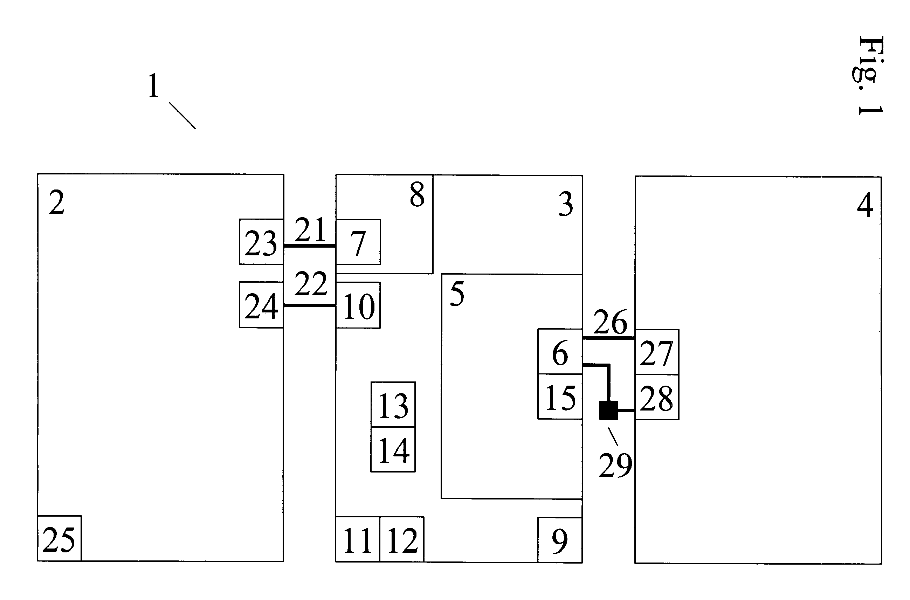

Figure 1 shows a computer system 1 according to the invention. The computer system 1 comprises a screen 2, a docking unit 3 and a portable computer 4.

The screen 2 and the docking unit 3 are connected with appropriate means in order to enable the docking unit 3 to provide the screen 2 with the data to be displayed. In the present example, this means is a VGA cable 21. This VGA cable 21 is connected to the graphical processor 8 in the docking unit 3 via the screen connection 7. According to an alternative embodiment, a LVDS connection may be used. In addition, the screen 2 and the docking unit 3 may be connected via a further cable 22. This may be the case if the screen 2 comprises input keys, like line select keys or is constituted as touch screen. This input cable is connected to the input connection 10 of the docking unit 3 to provide the docking unit with the corresponding data. In the example shown in Figure 1, the screen 2 comprises a connection 23 for receiving display data, a connection 24 for transmitting input data and a power connection 25 for receiving power. This power connection 25 may be directly connected to a power source or indirectly via the docking unit 3.

The docking unit 3 comprises an embedded computer 5. This embedded computer 5 comprises all means which are necessary to establish a network connection between the docking unit 3 and the portable computer 4. Therefore, the embedded computer 5 comprises a network connection 6 for connecting an arbitrary portable computer 4 to the docking unit 3. The docking unit 3 also comprises a power connection 9 to be connected to a power source. In the present embodiment, the docking unit 3 comprises also a rechargeable battery as power backup unit 13.

The docking unit 3 is connected to the portable computer 4 via an appropriate cable 26. This cable can be any appropriate network cable. This cable may be plugged in a network connection 27 of the portable computer 4. However, since a lot of portable computers 4 do not comprise such a network connection 27, in an alternative embodiment a USB connection 28 is used. In the later case, a USB/LAN adapter 29 may be interposed between the USB connection 28 and the network cable 26.

In an alternative embodiment, the portable computer 4 and the docking unit communicate via a wireless data network connection, for example, by using wireless LAN (W-LAN).

The inventive solution can easily be established, for example, if embedded computer 5 runs under the operation software embedded XP of Microsoft and the portable computer 4 uses windows XP of the same manufacture. Both computers comprise a software which enables to display an arrangement of information generated by the portable computer 4 on the fixed screen 2 via the network.

In the embodiment shown in Figure 1, the docking unit 3 comprises also additional connections. One kind of connection is the so-called video connection 11 which is used to plug in video cables connected to video cameras which are installed to monitor the cabin and the entrances of the aircraft. By pressing corresponding keys the pilot can decide whether he wants to work with the portable computer 4 and wants to see the corresponding information on the screen 2 or whether he wants to see the video signals provided by the video cameras. In order to be able to display signals of various video cameras on the screen 2, the docking unit 3 may comprise several video connections 11.

The docking unit 3 also comprises an aviation connection 12. This aviation connection 12 enables a connection between the portable computer 4 and the aviation devices in the cockpit. For example, the aviation devices may provide information about the present position of the aircraft to the portable computer 4 and the portable computer 4 may adapt the chart presently shown on the screen 2 in such a way that the present position of the aircraft corresponds to the center of the chart.

The docking unit 3 comprises also a backup memory 14. This backup memory may be used to save important information provided by the portable computer 4. For example, if the portable computer breaks down during the flight, at least information about the present chart shown on the screen 2 can be secured on that backup memory 14.

Figure 1 shows only one computer system 1. However, in most of the aircrafts, two computer systems 1 will be installed. In order to enable a communication between both computer systems 1, the docking units 3 comprise additional network connections 15.

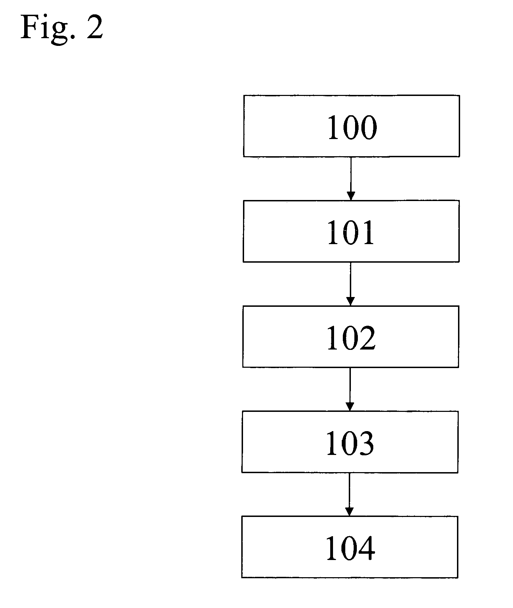

The inventive system enables that a pilot has access to all relevant data of the flight during all stages of the flight. In the following, the process of the flight with the computer system according to the invention is described in connection with the flow chart shown in Figure 2.

In step 100, the pilot downloads all relevant files about his next flight to his portable computer. These files may include the charts for the flight as well as the relevant whether forecast and flight plan. The pilot may download this information via a secure portal in the internet, via specific hotspots or specific network connections. He can study this material to prepare himself for the flight and to decide, for example, how much fuel he has to fuel for the next trip. He can also control the provided data and may request further data, if necessary. In a next step 101, the pilot enters the cockpit and has still access to this data, since he carries the portable computer with the data with him around. He can access the data by using the portable computer directly or by connecting the portable computer to the docking unit and interacting with the portable computer via the screen and the input means. However, at least immediately before the aircraft starts moving ("off-blocks"), the pilot will connecting the portable computer to the docking unit (step 102). This connection may be established with a USB/LAN-adapter which enables the pilot to connect the network cable to the USB connection of the portable computer. The pilot can place the portable computer somewhere in the cockpit, for example, in a corresponding holder and may fix the portable computer with a Velcro (step 103). The holder will also comprise a place for the power supply unit for the portable computer. Via this power supply unit, the portable computer may be connected to a power source of the aircraft. After the aircraft landed again, the pilot can write his report about the flight by using the input means of the computer system. However, the pilot can also disconnect his portable computer from the computer system (step 104), in particular from the docking unit, and write the report at a different place based on the information collected by the portable computer during the flight.

Therefore, a computer system to be used in the cockpit of an aircraft is provided which overcomes the drawbacks of the presently available solutions.

## Claims

1. Computer system (1) to be used in the cockpit of an aircraft, comprising a fixed screen (2), a docking unit (3) and a portable computer (4) in order to display on the fixed screen (2) in the cockpit information which is stored on the portable computer (4), wherein the docking unit (3) comprises an embedded computer (5) with a network connection (6) for connecting an arbitrary portable computer (4) to the computer system (1), a screen connection (7) for connecting the fixed screen (2) to the docking unit (3), a graphic processor (8), a power connection (9) and an input connection (10) for receiving signals from input means.

2. Computer system (1) according to claim 1, wherein the computer system (1) also comprises input means.

3. Computer system (1) according to claim 2, wherein the input means are line select keys.

4. Computer system (1) according to any of claims 2 or 3, wherein the fixed screen (2) and the input means are realized by a touch screen.

5. Computer system (1) according to any of claims 1 to 4, wherein the docking unit (3) also comprises at least one video connection (11) for displaying video signals provided by an external device on the fixed screen (2).

6. Computer system (1) according to any of claims 1 to 5, wherein the docking unit (3) also comprises an aviation connection (12) for connecting aviation devices in the cockpit of the aircraft to the portable computer (4).

7. Computer system (1) according to any of claims 1 to 6, wherein the docking unit (3) comprises a power backup unit (13).

8. Computer system (1) according to any of claims 1 to 7, wherein the docking unit (3) comprises a backup memory (14).

9. Computer system (1) according to any of claims 1 to 8, wherein the portable computer (4) comprises a USB connection (28) and the portable computer (4) is connected to the docking unit (3) via the USB connection (28), a USB/LAN adapter (29), a LAN cable (26) and the network connection (6) of the docking unit (3).

10. Computer system (1) according to any of claims 1 to 9, wherein the docking unit (3) also comprises a further network connection (15) for connecting a further portable computer to the portable computer (4) of the computer system (1).

11. Computer system (1) according to any of claims 1 to 10, wherein the computer system (1) also comprises a holder for the portable computer (4).

12. Computer system (1) according to claim 11, wherein the holder comprises also a power supply unit for the portable computer (4).

13. Retrofitting set to be installed in the cockpit of an aircraft in order to achieve a computer system (1), comprising a fixed screen (2) and a docking unit (3) which enable to display on the fixed screen (2) in the cockpit information which is stored on a portable computer (4) connected to the docking unit (3), wherein the docking unit (3) comprises an embedded computer (5) with a network connection (6) for connecting an arbitrary portable computer (4) to the computer system (1), a screen connection (7) for connecting the fixed screen (2) to the docking unit (3), a graphic processor (8), a power connection (9) and an input connection (10) for receiving signals from input means.

14. Retrofitting set according to claim 13, wherein the retrofitting set also comprises input means.

15. Retrofitting set according to claim 14, wherein the input means are line select keys.

16. Retrofitting set according to any of claims 14 or 15, wherein the fixed screen (2) and the input means are realized by a touch screen.

17. Retrofitting set according to any claims 13 to 16, wherein the docking unit (3) also comprises at least one video connection (11) for displaying video signals provided by an external device on the fixed screen (2).

18. Retrofitting set according to any of claims 13 to 17, wherein the docking unit (3) also comprises an aviation connection (12) for connecting aviation devices in the cockpit of the aircraft to the portable computer (4).

19. Retrofitting set according to any of claims 13 to 18, wherein the docking unit (3) comprises a power backup unit (13).

20. Retrofitting set according to any of claims 13 to 19, wherein the docking unit (3) comprises a backup memory (14).

21. Retrofitting set according to any of claims 13 to 20, wherein the docking unit (3) also comprises a further network connection (15) for connecting a further portable computer to the portable computer (4) of the computer system (1).

22. Retrofitting set according to any of claims 13 to 21, wherein the retrofitting set also comprises a holder for the portable computer (4).

23. Retrofitting set according to claim 22, wherein the holder comprises also a power supply unit for the portable computer (4).

24. A docking unit (3) to be used in order to achieve a computer system (1) according to claim 1, comprising an embedded computer (5) with a network connection (6) for connecting an arbitrary portable computer (4) to the computer system (1), a screen connection (7) for connecting a fixed screen (2) to the docking unit (3), a graphic processor (8), a power connection (9) and an input connection (10) for receiving signals from input means.

25. A method for providing a computer system (1) in the cockpit of an aircraft, wherein the cockpit comprises a fixed screen (2) and a docking unit (3), wherein the docking unit (3) comprises an embedded computer (5) with a network connection (6) for connecting an arbitrary portable computer (4) to the computer system (1), a screen connection (7) for connecting the fixed screen (2) to the docking unit (3), a graphic processor (8), a power connection (9) and an input connection (10) for receiving signals from input means, wherein the method comprises the step of connecting a portable computer (4) to the docking unit (3) via the network connection (6).
